# FASCICULE DE BREVET EUROPEEN

(11) **EP 2 436 912 B1**
(45) Date de publication et mention de la délivrance du brevet: **13.07.2016**
(21) Numéro de dépôt: 11182160.9
(22) Date de dépôt: 21.09.2011
(51) Int. Cl.: F02N 11/08

(54) **Procédé de gestion d'une fonction d'arrêt et de redémarrage automatique, calculateur mettant en oeuvre le procédé**
Verfahren zur Steuerung einer automatischen Stopp- und Startfunktion, sowie Rechner für den Einsatz des Verfahrens
Method for managing an automatic stop and restart function, computer implementing the method

(30) Priorité: 01.10.2010 FR 1057959
(43) Date de publication de la demande: 04.04.2012
(73) Titulaire: Peugeot Citroën Automobiles SA, 78140 Vélizy-Villacoublay (FR)
(72) Inventeur: Celisse, Arnaud, 92400 COURBEVOIE (FR)

(56) Documents cités:
- EP-A1- 2 105 608
- EP-A1- 2 138 711
- EP-A2- 1 382 842
- FR-A1- 2 795 770
- JP-A- 58 140 434

## Description

### Domaine technique de l'invention

La présente invention se rapporte au domaine des moteurs thermiques dotés d'une fonction d'arrêt et de redémarrage automatique, et plus particulièrement à la gestion de cette fonction.

### Arrière-plan technologique

Les systèmes d'arrêt et de redémarrage automatique du moteur thermique des véhicules , comme celui décrit par exemple dans la publication de demande de brevet FR 2 795 770 A1, tendent à se généraliser. Ces systèmes, souvent désignés par l'abréviation STT ou par l'expression anglaise Stop & Start, correspondent à une fonction d'arrêt et de redémarrage automatique dite fonction « STOP & START » qui en position d'arrêt (phase de « STOP » en terminologie anglaise) assure que le fonctionnement du moteur thermique est stoppé et qui en position de redémarrage automatique (phase de « START ») assure le redémarrage du fonctionnement du moteur thermique. Cela permet de diminuer la consommation de carburant et donc les émissions polluantes, comme l'émission de dioxyde de carbone.

Cette fonction d'arrêt et de redémarrage automatique dépend en particulier de l'état de charge ou SOC (pour l'expression anglaise State of Charge) de la batterie du véhicule.

Pour correctement exécuter cette fonction d'arrêt et de redémarrage automatique, on utilise une estimation de l'état de charge de la batterie. Par exemple, une estimation de l'état de charge de la batterie peut être prédite par un Boîtier d'Etat de Charge Batterie ou BECB. Le BECB utilise des informations de courant, de tension, ou de température de la batterie et calcule l'état de charge de la batterie en continu à partir d'une situation initiale d'état de charge qui doit être connue précisément.

Cependant, la batterie peut être déconnectée du véhicule pour être changée ou rechargée. A la reconnexion de la batterie, l'état de la batterie à la reconnexion n'est pas connu (batterie en charge, en décharge, nouvelle batterie...), le BECB subi un recalage, c'est-à-dire une remise en accord de l'estimation de l'état de charge par le BECB avec l'état de charge de la batterie. Le BECB ne se recale pas moteur tournant. Autrement dit, le BECB ne peut être recalé lorsque le moteur est en fonctionnement. Le BECB ne peut atteindre une performance ou une précision maximale que suite à une phase de veille longue du véhicule. Par exemple, le recalage du BECB peut être obtenu après 4h de veille, après la reconnexion de la batterie.

Tant que l'estimateur d'état de charge n'est pas recalé, la fonction d'arrêt et de redémarrage automatique est inhibée, ce qui est pénalisant pour les interventions qui nécessitent une déconnexion de la batterie, car il faut ensuite plusieurs heures d'immobilisation véhicule avant de pouvoir tester la fonction d'arrêt et de redémarrage automatique.

Il existe donc un besoin pour un procédé de gestion de la fonction d'arrêt et de redémarrage automatique dans lequel le délai d'attente nécessaire au recalage de l'estimation de l'état de charge n'a pas d'effets sur la fonction d'arrêt et de redémarrage automatique.

Pour cela, il est proposé un procédé de gestion d'une fonction d'arrêt et de redémarrage automatique d'un moteur thermique de véhicule comportant de plus une batterie, ledit procédé comprenant une étape de détection de l'occurrence d'une déconnexion suivie d'une connexion de la batterie, caractérisé en ce qu'il est suivi des étapes consistant à :
- détecter l'occurrence d'un mode de fonctionnement de maintenance ou de réparation du véhicule et, lorsqu'une telle occurrence est détectée,
- activer la fonction d'arrêt et de redémarrage automatique, sans prendre en compte l'état de charge de la batterie.

Avantageusement, lorsqu'une occurrence d'un mode de fonctionnement de maintenance ou de réparation n'est pas détectée, l'activation (05) de la fonction d'arrêt et de redémarrage automatique est réalisée dès vérification d'une estimation fiable de l'état de charge de la batterie et d'un seuil critique d'état de charge de la batterie atteint.

Avantageusement, l'estimation de l'état de charge de batterie est considérée fiable si un seuil de convergence de l'estimation de l'état de charge de la batterie est atteint, ou encore l'estimation de l'état de charge de batterie est considérée fiable si d'un délai d'attente depuis la connexion de la batterie est atteint.

Dans une variante où le véhicule comprend un calculateur de contrôle du moteur thermique, le procédé de l'invention comprend une étape de branchement d'un appareil électronique au calculateur précédant l'étape de détection de l'occurrence d'un mode de fonctionnement de maintenance ou de réparation du véhicule.

L'invention a aussi pour objet un véhicule comprenant une batterie, un moteur thermique, un estimateur de l'état de charge de la batterie et un calculateur de contrôle du moteur thermique, caractérisé en ce que ledit calculateur comporte des instructions pour l'exécution d'un procédé conforme à l'invention.

### Brève description des dessins

D'autres particularités et avantages apparaîtront à la lecture de la description ci-après d'un mode particulier de réalisation, non limitatif de l'invention, faite en référence à la figure unique dans laquelle :

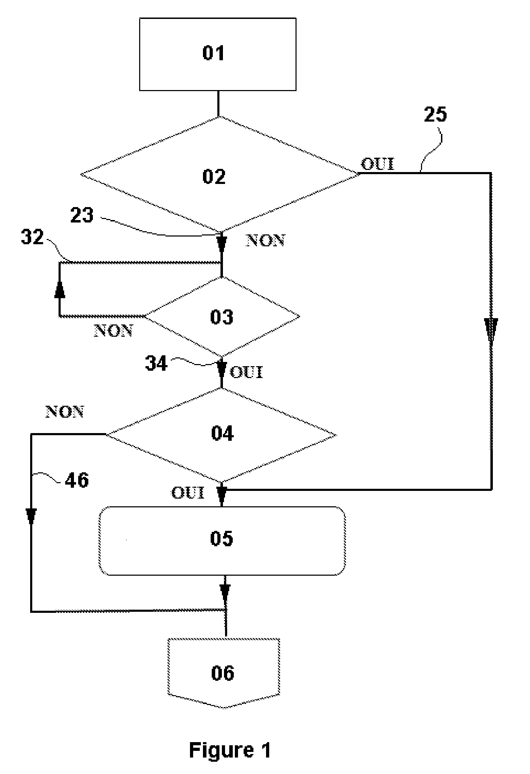

- La figure 1 est un logigramme de décision décrivant le procédé de l'invention.

### Description détaillée

L'invention concerne un procédé de gestion d'une fonction d'arrêt et de redémarrage automatique d'un moteur thermique par exemple disposé dans un véhicule. Le véhicule comprend en outre une batterie utilisée, entre autre pour le redémarrage automatique du moteur thermique et un estimateur de l'état de charge de la batterie. Le véhicule comprend par ailleurs un calculateur de contrôle moteur pour la gestion de la fonction d'arrêt et de redémarrage automatique.

Le procédé de l'invention sera mieux compris en faisant référence à la figure 1 qui présente sous forme d'organigramme les liens entre les différentes étapes du procédé de l'invention.

Conformément au procédé de l'invention, le calculateur de contrôle moteur procède d'abord à la détection de l'occurrence d'une déconnexion suivie d'une connexion de la batterie (étape 01 en figure 1). Ainsi le fait d'avoir détecté une déconnexion permet au calculateur de savoir que l'estimateur d'état de charge de la batterie ne connait plus le niveau d'état de charge de la batterie et le fait d'avoir détecté une connexion permet au calculateur de savoir que l'alimentation nécessaire au démarrage est désormais disponible.

Le calculateur de contrôle moteur procède ensuite à la détection de l'occurrence d'un mode de fonctionnement de maintenance ou de réparation (étape 02 sur la figure 1). Pour rendre la détection possible, on procède au branchement sur le calculateur de contrôle moteur d'un appareil électronique, tel qu'un outil électronique de diagnostic encore désigné outil APV (pour l'acronyme APrès Vente). L'occurrence du mode de fonctionnement de maintenance ou de réparation, ou encore nommé mode après-vente pour désigner une opération technique réalisée postérieurement à la vente du véhicule, est indiquée grâce à un signal envoyé par l'outil électronique de diagnostic au calculateur de contrôle moteur. C'est la détection du signal par le calculateur qui permet à ce dernier de savoir qu'une opération technique en mode après-vente est en cours. Dans une autre variante, il est possible que l'outil électronique de diagnostic communique au calculateur le signal indiquant que le véhicule est en mode après-vente par une liaison sans fil, donc sans branchement au calculateur.

Dans le cas où une occurrence de mode de fonctionnement de maintenance ou de réparation est détectée par le calculateur de contrôle moteur (branche 25), l'état de charge de la batterie n'est pas pris en compte et la fonction d'arrêt et de redémarrage automatique peut être activée (étape 05) immédiatement après le branchement de la batterie, sans condition de niveau d'état de charge de la batterie.

Dans le cas où une occurrence de mode de fonctionnement de maintenance ou de réparation n'est pas détectée par le calculateur moteur (branche 23), l'étape suivante (étape 03) consiste pour le calculateur de contrôle moteur à vérifier que l'estimation de l'état de charge de la batterie est fiable. La fiabilité de l'estimation de l'état de charge de la batterie peut être vérifiée en s'assurant de la convergence de l'état de charge de la batterie vers une valeur estimée sensiblement stable, en s'assurant par exemple qu'un seuil de convergence prédéterminé est atteint. Par seuil de convergence on entend par exemple un taux de variation de l'état de charge estimé en fonction du temps.

La fiabilité de l'estimation de l'état de charge de la batterie peut être aussi être vérifiée de manière simple en s'assurant qu'un délai d'attente depuis la connexion de la batterie est atteint, c'est-à-dire que le délai d'attente depuis la connexion de la batterie est supérieur ou égal à un durée minimum, tₘᵢₙ, déterminée. Le délai d'attente est de plusieurs heures, par exemple 4 heures, et correspond au délai nécessaire à l'estimateur d'état de charge de la batterie pour obtenir une valeur correcte et stable de l'état de charge de la batterie.

Tant que ce délai d'attente n'est pas atteint, le passage à l'étape suivante du procédé n'est pas autorisée (branche 32).

Lorsque le délai d'attente est atteint (branche 34), l'étape suivante (étape 04) consiste à vérifier si l'état de charge de la batterie est supérieur ou égal à un seuil critique d'état de charge prédéterminé à partir duquel la fonction d'arrêt et de redémarrage automatique peut être activée.

Ainsi si l'état de charge de la batterie est satisfaisant (branche 45), autrement dit si le seuil critique d'état de charge de la batterie est atteint ou dépassé, l'étape suivante (étape 05) consiste à autoriser la fonction d'arrêt et de redémarrage automatique.

Si au contraire, l'état de charge de la batterie n'est pas satisfaisant, (branche 46) l'étape suivante (étape 06) consiste à poursuivre la procédure qui peut être une procédure de test ou encore de diagnostic sans autoriser l'activation de la fonction d'arrêt et de redémarrage automatique.

L'invention permet ainsi de créer un mode de fonctionnement spécifique pour l'après vente permettant de tester la fonction d'arrêt et de redémarrage automatique sans l'information de l'état de charge batterie, qui n'est valide qu'après plusieurs heures de repos de la batterie suite à un changement de son état.

## Revendications

1. Procédé de gestion d'une fonction d'arrêt et de redémarrage automatique d'un moteur thermique de véhicule comportant de plus une batterie, ledit procédé comprenant une étape (01) de détection de l'occurrence d'une déconnexion suivie d'une connexion de la batterie, **caractérisé en ce qu'**il est suivi des étapes consistant à
- détecter (02) l'occurrence d'un mode de fonctionnement de maintenance ou de réparation du véhicule et, lorsqu'une telle occurrence est détectée,
- activer (05) la fonction d'arrêt et de redémarrage automatique, sans prendre en compte l'état de charge de la batterie.

2. Procédé selon la revendication 1, **caractérisé en ce que**, lorsqu'une occurrence d'un mode de fonctionnement de maintenance ou de réparation n'est pas détectée, l'activation (05) de la fonction d'arrêt et de redémarrage automatique est réalisée dès vérification d'une estimation fiable de l'état de charge de la batterie et d'un seuil critique d'état de charge de la batterie atteint.

3. Procédé selon la revendication 2, **caractérisé en ce que** l'estimation de l'état de charge de batterie est considérée fiable si un seuil de convergence de l'estimation de l'état de charge de la batterie est atteint.

4. Procédé selon la revendication 2, **caractérisé en ce que** l'estimation de l'état de charge de batterie est considérée fiable si d'un délai d'attente depuis la connexion de la batterie est atteint.

5. Procédé selon l'une quelconque des revendications 1 à 4, **caractérisé en ce que** le véhicule comprenant un calculateur de contrôle du moteur thermique, ledit procédé comprend une étape de branchement d'un appareil électronique au calculateur précédant l'étape de détection (02) de l'occurrence d'un mode de fonctionnement de maintenance ou de réparation du véhicule.

6. Véhicule comprenant une batterie, un moteur thermique, un estimateur de l'état de charge de la batterie et un calculateur de contrôle du moteur thermique, **caractérisé en ce que** ledit calculateur comporte des instructions pour l'exécution d'un procédé conforme à l'une quelconque des revendications précédentes.

## Patentansprüche

1. Verfahren zum Verwalten einer Start-Stopp-Automatik Funktion eines Fahrzeugverbrennungsmotors, der außerdem eine Batterie umfasst, wobei das besagte Verfahren einen Schritt (01) zum Erfassen des Vorkommens einer Trennung, gefolgt von einer Verbindung der Batterie umfasst, **dadurch gekennzeichnet, dass** darauf ein Schritt folgt, der darin besteht,
- das Vorkommen eines Wartungs- oder Reparaturbetriebsmodus des Fahrzeugs zu erfassen (02), und, wenn ein solches Vorkommen erfasst wird,
- die Start-Stopp-Automatik Funktion zu aktivieren (05), ohne den Ladezustand der Batterie zu berücksichtigen.

2. Verfahren nach Anspruch 1, **dadurch gekennzeichnet, dass**, wenn ein Vorkommen eines Wartungs- oder Reparaturbetriebsmodus nicht erfasst wird, die Aktivierung (05) der Start-Stopp-Automatik Funktion ab der Überprüfung einer zuverlässigen Schätzung des Ladezustands der Batterie und einer kritischen Schwelle des Ladezustands der Batterie vorgenommen wird, die erreicht ist.

3. Verfahren nach Anspruch 2, **dadurch gekennzeichnet, dass** die Schätzung des Ladezustands der Batterie als zuverlässig angesehen wird, wenn eine Konvergenzschwelle für die Schätzung des Ladezustands der Batterie erreicht wird.

4. Verfahren nach Anspruch 2, **dadurch gekennzeichnet, dass** die Schätzung des Ladezustands der Batterie als zuverlässig angesehen wird, wenn eine Wartefrist seit der Verbindung der Batterie erreicht ist.

5. Verfahren nach irgendeinem der Ansprüche 1 bis 4, **dadurch gekennzeichnet, dass** das besagte Verfahren, wenn das Fahrzeug einen Steuerungsrechner für den Verbrennungsmotor umfasst, einen Schritt zum Anschließen eines Elektronikgeräts an den Rechner vor dem Schritt der Erfassung (02) des Vorkommens eines Wartungs- oder Reparaturbetriebsmodus des Fahrzeugs umfasst.

6. Fahrzeug, eine Batterie, einen Verbrennungsmotor, eine Schätzvorrichtung für den Ladezustand der Batterie und einen Steuerungsrechner für den Verbrennungsmotor umfassend, **dadurch gekennzeichnet, dass** der besagte Rechner Befehle zur Ausführung eines Verfahrens nach irgendeinem der vorherigen Ansprüche umfasst.

## Claims

1. Method for managing a function for the automatic stopping and restarting of a vehicle thermal engine comprising in addition a battery, said method comprising a step (01) of detecting the occurrence of a disconnection followed by a connection of the battery, **characterised in that** it is followed by steps consisting of
- detecting (02) the occurrence of a vehicle maintenance or repair functioning mode and, when such an occurrence is detected,
- activating (05) the automatic stop and restart function, without taking into account the state of charge of the battery.

2. Method according to claim 1, **characterised in that**, when an occurrence of a maintenance or repair functioning mode is not detected, the activation (05) of the automatic stop and restart function is effected as soon as a reliable estimation of the state of charge of the battery and of a critical threshold of the state of charge of the battery reached is verified.

3. Method according to claim 2, **characterised in that** the estimation of the state of charge of the battery is considered to be reliable if a threshold of convergence of the estimation of the state of charge of the battery is reached.

4. Method according to claim 2, **characterised in that** the estimation of the state of charge of the battery is considered to be reliable if a waiting time since the connection of the battery is reached.

5. Method according to any one of claims 1 to 4, **characterised in that**, the vehicle comprising a computer controlling the thermal engine, said method comprises a step of connecting an electronic apparatus to the computer preceding the step (02) of detecting the occurrence of a vehicle maintenance or repair functioning mode.

6. Vehicle comprising a battery, a thermal engine, a device estimating the state of charge of the battery and a computer controlling the thermal engine, **characterised in that** said computer contains instructions for executing a method according to any one of the preceding claims.
